# EUROPEAN PATENT APPLICATION

(11) **EP 3 296 188 A1**
(43) Date of publication of application: **21.03.2018**
(21) Application number: 16792172.5
(22) Date of filing: 10.05.2016
(51) Int. Cl.: B62K 23/02, B62K 23/08

(54) **CONTROL MECHANISM FOR DYNAMIC BALANCING VEHICLE**

(30) Priority: 13.05.2015 CN 201520304843 U
(71) Applicant: Ninebot (Beijing) Tech Co., Ltd., Beijing 100192 (CN)
(72) Inventor: JIANG, Xudong, Beijing 100192 (CN); ZHANG, Hui, Beijing 100192 (CN); ZHANG, Zhenyuan, Beijing 100192 (CN); WEI, Wai, Beijing 100192 (CN); WANG, Ye, Beijing 100192 (CN)
(74) Representative: Regimbeau
(86) International application number: PCT/CN2016/081582
(87) International publication number: WO 2016/180322

(57) **Abstract**

A control mechanism used for a dynamic balance vehicle is mounted on the dynamic balance vehicle, which includes a vehicle body and a steering mechanism arranged on the vehicle body. The control mechanism includes a rod body (1), a connecting seat (2), leg-control pads (3), a pull rod (4) and a handle (5). A sliding space for sliding of the pull rod (4) is formed in the rod body (1) and has a first position and a second position. An upper end part of the rod body (1) is connected with the connecting seat (2), and a lower end part of the rod body (1) is connected with the steering mechanism. The rod body (1), when being rotated, drives the steering mechanism to rotate to control steering of the vehicle body. An opening is formed in the connecting seat (2), through which the pull rod (4) enters the sliding space. The leg-control pads (3) are connected to two sides of the connecting seat (2), and drive the rod body (1) to rotate. The pull rod (4) retractably slides along the sliding space, and is limited in the sliding space to slide between the first position and the second position. The handle (5) is connected with the pull rod (4), and adjusts a position through the pull rod (4). The handle (5) drives the rod body (1) to rotate. The control mechanism may be suitable for both operation with hands and operation with legs.

## Description

### TECHNICAL FIELD

The disclosure relates to the technical field of dynamic balance vehicles, and particularly to a control mechanism used for a dynamic balance vehicle.

### BACKGROUND

At present, dynamic balance vehicles become a popular short-distance transportation tool, including single-wheel dynamic balance vehicles and double-wheel dynamic balance vehicles. Double-wheel dynamic balance vehicles available on the current market mainly include a hand-control type and a leg-control type.

As for a double-wheel dynamic balance vehicle of a hand-control type, a handle arranged on a steering rod of a vehicle body is manually controlled to control the running of the dynamic balance vehicle. Because it is easy to keep balance, a rider may quickly master the riding skill, and the hand-control dynamic balance vehicle is catching on in a big way. However, such a hand-control dynamic balance vehicle has a considerable constraint to hands and the double hands are thus tied down, so that it is difficult for the rider to do other things with the hands during riding. Moreover, since the steering rod is relatively long, dragging is inconvenient in a non-riding state.

As for a double-wheel dynamic balance vehicle of a leg-control type, a leg-control pad arranged on a leg-control rod is clamped by two legs to control the leg-control rod, and in turn to control the running of the dynamic balance vehicle. A main feature of the leg-control double-wheel dynamic balance vehicle is that both hands may be freed. The both hands of a rider may have an enough free space to do other things during riding the vehicle. However, a leg-control length of such a leg-control dynamic balance vehicle is individual and fixed, and a leg-control rod of a certain length is only applied to a group of people with a certain height. Most of other groups of people could not normally ride such vehicles due to different heights, body sizes and the like, or an unsuitable height of a leg-control position would greatly influences riding comfort during riding. Moreover, in a non-riding state, since the height of the leg-control rod is relatively small, the length which is suitable for leg control is unsuitable for the hands to push and pull. The rider cannot comfortably drag the vehicle under a normal walking condition, so that great inconvenience is brought to outdoor riding.

A present double-wheel dynamic balance vehicle is alternatively hand-control or leg-control. However, in outdoor riding, since environments would be complicated, it would be relatively convenient to operate with a handle in some places, while it would be convenient to control through legs in some places. In this case, great inconvenience is brought to outdoor riding. A rider has to carry both a hand-control rod and a leg-control rod to adapt to conditions where hand-control and leg-control are required respectively. Disassembling the hand-control rod to replace it with the leg-control rod, or disassembling the leg-control rod to replace it with the hand-control rod, leads to great inconvenience to travel, and increases economic cost.

Therefore, a double-wheel dynamic balance vehicle suitable for hand operation, leg operation and dragging in a non-riding state, as well as suitable for operation by different groups of people would be highly desirable.

### SUMMARY

A purpose of embodiments of the disclosure is to provide a control mechanism for a double-wheel dynamic balance vehicle which is suitable for both operation with hands and operation with legs.

Another purpose of the embodiments of the disclosure is to provide a control mechanism for a double-wheel dynamic balance vehicle which is suitable for all operation with hands, operation with legs and dragging in a non-riding state, as well as suitable for operation by different groups of people.

The embodiments of the disclosure adopt the following technical solutions.

In an embodiment of the disclosure, a control mechanism for a dynamic balance vehicle is provided, which may be mounted on the dynamic balance vehicle including a vehicle body and a steering mechanism arranged on the vehicle body. The control mechanism includes a rod body, a connecting seat, a leg-control pad, a pull rod and a handle. A sliding space for sliding of the pull rod may be formed in the rod body. The sliding space may have a first position and a second position. An upper end part of the rod body may be connected with the connecting seat. A lower end part of the rod body may be connected with the steering mechanism, and the rod body, when being rotated, may drive the steering mechanism to rotate to control steering of the vehicle body. An opening may be formed in the connecting seat. The pull rod may enter the sliding space through the opening. The leg-control pad may be connected to two sides of the connecting seat, and may drive the rod body to rotate. The pull rod may retractably slide along the sliding space, and may be limited in the sliding space, so as to slide between the first position and the second position. The handle may be connected with the pull rod. A position of the handle may be adjusted through the pull rod, and the handle may drive the rod body to rotate.

In an embodiment, the pull rod may be limited in the sliding space through a positioning structure and a limiting structure, and the pull rod may be prevented from separation from or sinking into the sliding space through the positioning structure and the limiting structure.

In an embodiment, the positioning structure may include a limiting element arranged at one end of the pull rod in a sleeving manner and at least two positioning holes formed with an interval between the first position and the second position. The limiting element may include a limiting sleeve, a spring and a limiting bead. A recess may be formed in the limiting sleeve. The spring may be embedded in the recess. The limiting bead may be placed on the spring. The limiting bead may be engaged with the positioning hole at the first position when the pull rod is at the first position, and the limiting bead may be engaged with the positioning hole at the second position when the pull rod is at the second position. The limiting mechanism may include a groove formed in a length direction of the pull rod. A limiting hole formed in the sliding space and a limiting stud. The groove may be provided with an upper limiting end and a lower limiting end. The limiting stud may be engaged at the upper limiting end of the groove when the pull rod is at the first position, and the limiting stud may be engaged at the lower limiting end of the groove when the pull rod is at the second position.

In an embodiment, the rod body may include an upper rod body and lower rod body which are separately arranged. A height of the upper rod body relative to the lower rod body may be adjustable. The control mechanism may further include a support rod, one end of which may be nested and fixed in the lower rod body, and the other end may be nested and slidably arranged in the upper rod body. The upper rod body may slide along the support rod to adjust the height, and may be limited on the support rod.

In an embodiment, the control mechanism may further include a pull rod support sleeve. At least a part of the pull rod support sleeve may be sleeved in the support rod. An upper end of the pull rod support sleeve may be connected with the upper rod body. An interior of the pull rod support rod and an interior of the support rod may together form the sliding space, and the pull rod may be sleeved in the pull rod support sleeve to slide in the sliding space.

In an embodiment, the upper end of the pull rod support sleeve may be connected with the upper rod body through the limiting stud, and the upper rod body, when sliding along the support rod, may drive the pull rod support sleeve to slide together.

In an embodiment, a lower end of the pull rod is provided with a limiting sleeve in the sleeving manner. A recess may be formed in the limiting sleeve. A spring may be embedded in the recess. A limiting bead may be placed on the spring. At least two positioning holes with an interval may be formed in the pull rod support sleeve. The limiting bead may be engaged with the positioning hole in the lowermost position of the pull rod support sleeve to limit the pull rod at the first position when the pull rod is at the first position, and the limiting bead may be engaged with the positioning hole in the uppermost end of the pull rod support sleeve to limit the pull rod at the second position when the pull rod is at the second position.

A groove with limiting ends may be formed in the pull rod in the length direction. Limiting holes may be formed in the pull rod support sleeve and the upper rod body. The limiting stud may be engaged at the upper limiting end of the groove through the limiting hole when the pull rod is at the first position, and the limiting stud may be engaged at the lower limiting end of the groove through the limiting hole when the pull rod is at the second position.

In an embodiment, a first limiting sleeve may be arranged at an end, connected with the upper rod body, of the support rod in a sleeving manner. A second limiting sleeve may be nested at a lower end of the upper rod body, and a lower end face of the first limiting sleeve may be engaged with an upper end face of the second limiting sleeve to prevent the upper rod body from being separated from the support rod.

In an embodiment, the upper rod body and the support rod may be fixed relative to one another through a locking component. The upper rod body may slide along the support rod to adjust the height when the locking component is in a loose state, and the upper rod body may be fixed on the support rod when the locking component is in a locking state.

In an embodiment, the locking component may include a locking seat, a gasket arranged in the locking seat and a locking nut. A through hole for mounting the locking seat may be provided in the upper rod body, and a mounting hole for mounting the locking nut may be provided in the locking seat.

The embodiments of the disclosure have the following technical effects.
(1) According to the control mechanism of the embodiments of the disclosure, the leg-control pad operated by legs and the handle operated by hands are provided on the rod body for implementing steering of the dynamic balance vehicle. Therefore leg-operated steering and hand-operated steering may both be implemented, and multiple steering functions are realized.
(2) The height of the rod body of the control mechanism of the embodiments of the disclosure is adjustable. Therefore it is suitable for riding of various people with different heights, and it is economical and applicable.

When the embodiments of the disclosure are implemented, if an operation with hands is not required, only the pull rod connected with the handle needs to be hidden in the rod body, so that an influence on leg-control steering and an influence on aesthetic appearance of the vehicle body are both eliminated; and if an operation with hands is required, only the pull rod needs to be pulled out to a height suitable for operation. Moreover, in a non-riding state, the pull rod may be pulled out to a height suitable for dragging when a human body normally walks, so as to facilitate dragging of the vehicle. The control mechanism of the embodiments of the disclosure facilitates outdoor riding, meets different operation requirements, and reduces travel cost.

The above description is only a summary of the technical solutions of the disclosure, and may be implemented according to the contents of the specification to make the technical means of the disclosure understood more clearly. Moreover, for making the abovementioned and other purposes, characteristics and advantages of the disclosure more obvious and easier to understood, specific embodiments of the disclosure will be listed below.

### BRIEF DESCRIPTION OF DRAWINGS

In order to describe the technical solutions of the embodiments of the disclosure clearly, the drawings showing the embodiments will be introduced below. Obviously, the drawings listed below are only embodiments of the disclosure. Other drawings may further be obtained by those skilled in the art according to these drawings without creative work.
FIG. 1 is a structure diagram of a control mechanism according to an embodiment of the disclosure.
FIG. 2 is a structure diagram of a control mechanism according to another embodiment of the disclosure.
FIG. 3 is an exploded view of a control mechanism according to another embodiment of the disclosure.
FIG. 4 is another structure diagram of a control mechanism according to another embodiment of the disclosure.
FIG. 5 is another structure diagram of a control mechanism according to another embodiment of the disclosure.
FIG. 6 is a structure diagram of a control mechanism mounted on a vehicle body of a dynamic balance vehicle according to the disclosure.
FIG. 7 is another structure diagram of a control mechanism mounted on a vehicle body of a dynamic balance vehicle according to the disclosure.
FIG. 8 is a structure diagram of a vehicle body of a dynamic balance vehicle with a control mechanism mounted thereon according to an embodiment of the disclosure.

### DETAILED DESCRIPTION

Exemplary embodiments of the disclosure will be described below with reference to the drawings in more detail. Although the exemplary embodiments of the disclosure are shown in the drawings, it should be understood that the disclosure may be implemented in various forms and is not limited to the embodiments elaborated herein. Instead, these embodiments are provided to make the disclosure to be understood more thoroughly and to completely convey the scope of the disclosure to those skilled in the art.

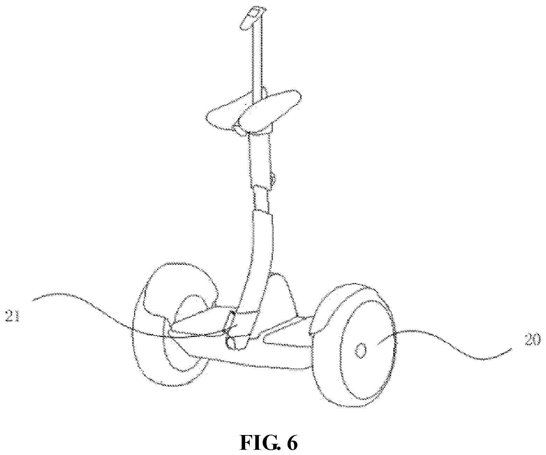

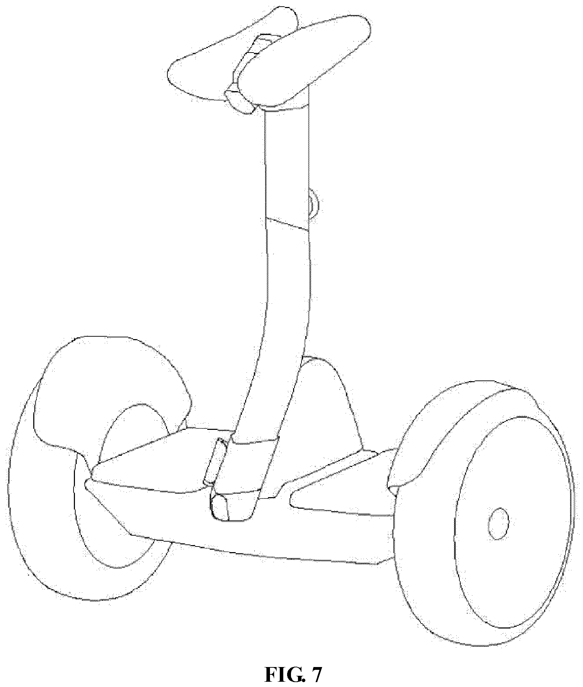

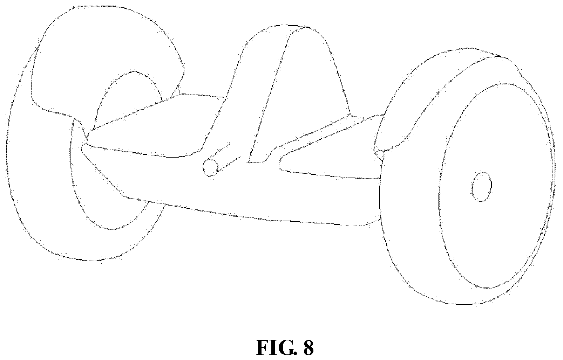

A control mechanism (or a manipulation mechanism) of the embodiments of the disclosure is intended to be mounted on a vehicle body of a dynamic balance vehicle, particularly a double-wheel dynamic balance vehicle. The control mechanism is connected with a steering mechanism on the vehicle body for controlling running of the vehicle body, including steering in a riding state and dragging in a non-riding state, as shown in FIGs. 6 and 7. One end of the control mechanism is directly fixed on a vehicle frame or in another position of the vehicle body. Tires are mounted on the vehicle frame, and wheel covers are provided on two sides of the vehicle frame. A control assembly and a power assembly are arranged in hubs or the wheel covers, as shown in FIG. 8. The vehicle body to be mounted with these components is not particularly limited in the embodiments of the disclosure, and it may be a vehicle body structure disclosed in a conventional art. For example, it may be a vehicle body structure disclosed by a Chinese Patent Application No. 201210421265.X on January 16, 2013, an Application No. 201410385053.X on October 29, 2014 and an Application No. 201320666169.1 on May 21, 2014, and will not be elaborated herein.

The control mechanism of the embodiments of the disclosure can select various operation modes according to a riding condition. A rider can select to control steering of the vehicle body through leg movements or hand movements. The rider can also adjust the height of the control mechanism to comfortably drag the vehicle body in the non-riding state. The control mechanism of the embodiments of the disclosure will be introduced below with reference to the drawings.

### Embodiment 1

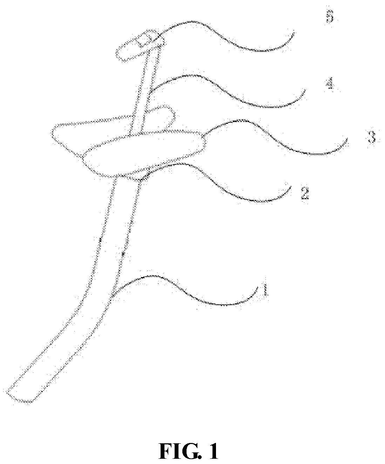

FIG. 1 is a structure diagram of a control mechanism according to the embodiment. As shown in FIG. 1, the control mechanism of the embodiment of the disclosure may include a rod body 1, a connecting seat 2, leg-control pads 3, a pull rod 4 and a handle 5.

The rod body 1 may have a hollow structure, a sliding space (not shown in the figure) for sliding of the pull rod 4 is formed therein. The sliding space has a first position and a second position (not shown in the figure). An upper end part of the rod body 1 is connected with the connecting seat 2, and a lower end part of the rod body 1 is connected with a steering mechanism of a vehicle body 20 (referring to FIGs. 6 and 7). The rod body 1, when being rotated, drives the steering mechanism to rotate to control steering of the vehicle body 20. The first position may be a position where the bottommost end of the pull rod 4 contacts the sliding space when the pull rod 4 is in a non-retracted state, and the second position may be a position where the bottommost end of the pull rod 4 contacts the sliding space when the pull rod 4 is in a completely retracted state, that is, the pull rod 4 is extended to an extreme position. In other words, the first position and the second position are extreme reachable positions when the pull rod 4 is pushed downwards and the pull rod 4 is pulled upwards, respectively. In order to enhance aesthetic appearance and controllability, a lower end of the rod body 1 can be formed in a slightly bent shape, and an upper end can have a straight structure.

The connecting seat 2 may be connected with the upper end of the pull rod 4 through a screw, and two leg-control pads 3 are fixedly connected to two sides of the connecting seat 2. The leg-control pads 2 may be formed in shapes suitable for being clamped by inner sides of two legs. The leg-control pads 3 can be clamped and leg-controlled by the legs to drive the rod body 1 to rotate and to further control steering of the vehicle body 20. An opening is formed in the connecting seat 2, and the pull rod 4 enters the sliding space through the opening.

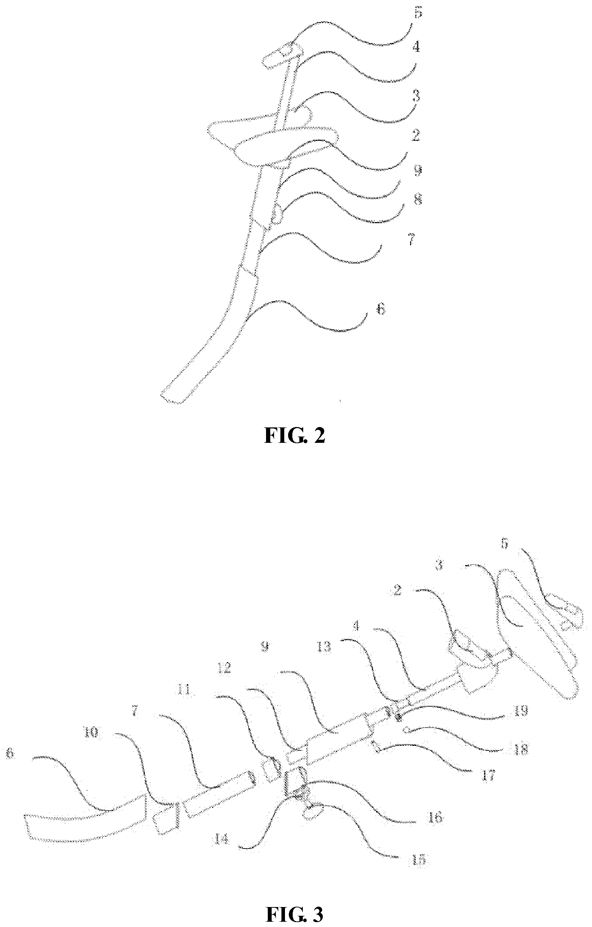

The pull rod 4 is accommodated in the sliding space, retractably slides along the sliding space and is limited in the sliding space to slide in the sliding space between the first position and the second position. The pull rod 4 may be limited in the sliding space by a limiting structure, so that the pull rod 4 may not sink into or move away from the sliding space. In an exemplary structure of the embodiment of the disclosure, a limiting element may be arranged at a lower end of the pull rod 4 in a sleeving/nesting manner, and a plurality of limiting holes are formed at intervals between the first position and second position in the sliding space. The limiting element may include a limiting sleeve, a spring and a limiting bead (referring to components indicated by reference signs 13, 18 and 19 in FIG. 3). A recess (or hole) is formed in the limiting sleeve; the spring is embedded in the recess; and the limiting bead is placed on the spring. The limiting bead is embedded into the limiting hole at the first position and engaged with the limiting hole when the pull rod 4 is at the first position, and the limiting bead is embedded into the limiting hole at the second position and engaged with the limiting hole, so as to fix the pull rod 4 in the sliding space when the pull rod 4 is at the second position. When the pull rod 4 slides between the first position and the second position, due to an action of tensile force, the limiting bead may compress the spring and be retracted to the recess. When the pull rod 4 is pulled to a desired height, the tensile force is released, and the limiting bead contacts an inner wall of the sliding space under an action of the spring, so as to achieve fixation of the pull rod 4. That is, the limiting bead has a limiting function on one hand, and also has a function of guiding the pull rod 4 to slide in the sliding space on the other hand. With formation of multiple limiting holes, the pull rod 4 may be pulled to different heights to meet requirements of different people with different heights on the height of the pull rod. In addition, for making the pull rod 4 long enough, the pull rod 4 may adopt a sleeved structure. That is, the pull rod 4 may include a first pull rod and a second pull rod nested in the first pull rod. A sum of a pulled-out length of the pull rod 4, a height of the rod body 1 and a height of the vehicle body is suitable for a people with a normal height.

Since the connection between the limiting bead and the spring is movable, when a relatively strong tensile force is applied, engagement between the limiting bead and the limiting holes may be released, and then the pull rod 4 is easily separated from the sliding space. Therefore, for avoiding the pull rod 4 being separated from the sliding space, a separation prevention structure can be provided. Any structure capable of preventing the pull rod 4 from being separated from the sliding space may be adopted. The embodiment of the disclosure shows, but not limited to, a simple separation prevention structure. According to an exemplary structure of the embodiment of the disclosure, an elongated groove with limiting ends may be formed in a length direction of the pull rod 4. A through hole is formed in a position, higher than the second position, in the sliding space. That is, the through hole is formed in the rod body 1, and then a limiting stud (limiting pin) is inserted into the through hole. The limiting stud is positioned in the groove. The cooperation of the limiting stud and the groove has a simple structure, and may not occupy a large space. Since the upper end of the rod body 1 is fixedly connected to the connecting seat 2, and the connecting seat 2 may cover the limiting stud, the limiting stud passes through the groove when the pull rod 4 is pulled out upwards. When the pull rod 4 is at the second position, the limiting stud is engaged with the lower limiting end of the groove, namely engaged at the lowermost end of the groove, to form a constraint force on the pull rod 4 to prevent the pull rod 4 from being pulled out of the sliding space. When the pull rod 4 is at the first position, the limiting stud is engaged at the uppermost end of the groove to form a constraint force on the pull rod 4 to prevent the pull rod 4 from sinking into the sliding space.

The handle 5 is connected to the top end of the pull rod 4 in a sleeving manner, and the handle 5 may be operated to guide the pull rod 4 to slide in the sliding space. The handle 5 may be operated to drive the rod body 1 to rotate. The handle 5 may have a shape suitable for handhold or pushing/pulling, and the shape of the handle 5 shown in FIG. 1 is a shape suitable for pushing/pulling. When the handle 5 is not used, the handle 5 may be placed at a position between the two leg-control pads 3. When the handle 5 adopts a shape suitable for handhold by both hands, for example a linear shape, and the handle 5 is used, after the pull rod 4 is pulled out, the handle 5 may be rotated clockwise or counterclockwise, such that the handle 5 is suitable to be held by a rider.

Shapes of the rod body 1 and the pull rod 4 are not limited in the embodiment of the disclosure. For example, sectional shapes of the rod body 1 and the pull rod 4 can be triangles, round shapes, rhomboids, quadrangles and the like.

The control mechanism according to the embodiment can realize both leg-control operation and hand-control operation functions. When the control mechanism of the embodiment is used, the assembled control mechanism is mounted on the vehicle body 20 through a locking mechanism. For example, the control mechanism can be mounted on the vehicle body 20 through a locking nut or a engagement/clamping structure 21. During outdoor riding, when an operation with legs is required, the pull rod 4 can be moved to the lowermost position and the handle 5 is placed in a space formed by the leg-control pads 3. When an operation with the handle 5 is required instead, the handle 5 can be pulled to pull the pull rod 4 out to a height suitable for holding or dragging.

### Embodiment 2

A control mechanism of the embodiment has a structure basically the same as that of Embodiment 1. The difference is that the height of a rod body of the control mechanism of this embodiment is adjustable. FIG. 2 is a structure diagram of a control mechanism according to the embodiment. As shown in FIG. 2, the control mechanism of the embodiment of the disclosure may include a rod body, a connecting seat 2, leg-control pads 3, a pull rod 4 and a handle 5. Structures of the connecting seat 2, the leg-control pads 3 and the handle 5 are the same as those described in embodiment 1, and thus descriptions thereof will be omitted herein for the sake of conciseness.

In the embodiment, the rod body includes an upper rod body 9 and lower rod body 6 which are separate, and a height between the upper rod body 9 and the lower rod body 6 is adjustable. A support rod 7 is provided in a nested and sandwiched manner between the upper rod body 9 and the lower rod body 6. One end of the support rod 7 is nested and fixed in the lower rod body 9, while the other end is slidably nested and arranged in the interior of the upper rod body 6. The upper rod body 9 slides along the support rod 7 to adjust the height between the upper rod body 9 and the lower rod body 6, and is limited on the support rod 8. In order to enhance aesthetic appearance and controllability, the lower rod body 6 may be formed in a slightly bent shape, and the upper rod body 9 may be in a form of a straight-cylinder structure.

Specifically, as shown in the exploded view shown in FIG. 3, a fixing sleeve 10 is arranged at an upper end of the lower rod body 6 in a sleeving manner; a lower end of the support rod 7 is accommodated in the fixing sleeve 10 for connection with the lower rod body 6; and the support rod 7 can be fixed on the lower rod body 6 through a screw. A fixing sleeve 16 is arranged at a lower end of the upper rod body 9 in a sleeving manner, and a fixing sleeve 12 is arranged at an upper end of the support rod 7 in the sleeving manner. After the support rod 7 is inserted from an upper end of the upper rod body 9, a lower end face of the fixing sleeve 12 is engaged with an upper end face of the fixing sleeve 16, and the upper end face of the fixing sleeve 16 limits the support rod 7 from penetrating through the upper rod body 9, so as to prevent separation between the upper rod body 9 and the support rod 7. The upper rod body 9 can be positioned on the support rod 7 through a locking component 8. The upper rod body 9 may slide along the support rod 7 to adjust the height between the upper rod body 9 and the lower rod body 6 when the locking component 8 is in a loose state, and the upper rod body 9 is fixed to the support rod 7 when the locking component 8 is in a locking state. In an exemplary structure of the embodiment, as shown in FIG. 3, the locking component 8 may include a locking seat 14, a gasket and a locking nut 15. A through hole for mounting the nut 15 is formed in the locking seat 14, and a recess (or hole) for placing the gasket is formed in the end, facing the interior of the upper rod body 9, of the locking seat 14. The recess is formed in an end part of the through hole. A mounting hole for mounting the locking seat 14 is provided in the lower end of the upper rod body 9. The gasket contacts a side surface of the fixing sleeve 16. When the upper rod body 9 slides to a required height of the support rod 7, the locking nut 15 is tightened, and the nut 15 is pressed against the side surface of the fixing sleeve 16 through the gasket, so as to achieve fixation between the upper rod body 9 and the support rod 7. The fixing sleeves 10, 12 and 16 may be made from plastic material. Limiting between the upper rod body 9 and the support rod 7 may be implemented through the fixing sleeves, and such a limiting manner achieves convenience for operation and easiness for manufacturing.

In the embodiment, the pull rod 4 slides in a sliding space through an extending rod, for example a pull rod support sleeve 12. A width of the pull rod support sleeve 12 is smaller than a width of the support rod 7, and is larger than a width of the pull rod 4. At least a part of the pull rod support sleeve 12 is sleeved in the support rod 7, and interiors of the pull rod support sleeve 12 and the support rod 7 together form the sliding space for sliding of the pull rod 4. The pull rod 4 may be limited in the sliding space through a limiting mechanism, so that the pull rod 4 may not sink into or move away from the sliding space. For example, a limiting element described in embodiment 1 may be arranged at one end of the pull rod 4. The limiting element may include a limiting sleeve 13, a spring 19 and a limiting bead 18. A recess is formed in the limiting sleeve 13; the spring 19 is buried in the recess; and the limiting bead (ball) 18 is placed on the spring 19. A plurality of limiting holes are formed in the pull rod support sleeve 12. In the embodiment, three limiting holes are shown, and by taking the ground as a reference, according to a sequence in the length direction of the pull rod support sleeve, they are known as the first, second and third limiting holes in order. The limiting bead 18 is embedded into the first limiting hole and engaged with the limiting hole when the pull rod 4 is at a first position, and the limiting bead is embedded into the second limiting hole and engaged with the limiting hole, so as to fix the pull rod in the sliding space, when the pull rod 4 is at a second position.

In the embodiment, the third limiting hole is used for a limiting stud 17 to pass through. Similarly to Embodiment 1, separation between the pull rod 4 and the sliding space can be prevented by the limiting stud 17. A groove structure which is the same as that in Embodiment 1 can be formed in the pull rod 4. For forming the sliding space, the pull rod support sleeve 12 can move together with the upper rod body 9, and they can be connected through the limiting stud 17. Therefore, a through hole corresponding to the third limiting hole is formed in the upper rod body 9. The limiting stud 17 penetrates through the through hole and the third limiting hole to enter a groove to connect the pull rod support sleeve 12 and the upper rod body 9. When the upper rod body 9 slides along the support rod 7, the pull rod support sleeve 12 moves together with the upper rod body 9, that is, the pull rod support sleeve 12 is in a stationary state relative to the upper rod body 9. Therefore, the limiting stud 17 has a function of fixing the pull rod support sleeve 12 onto the upper rod body 9 to form the sliding space on one hand, and has a function of preventing the pull rod 4 from being separated from the sliding space on the other hand.

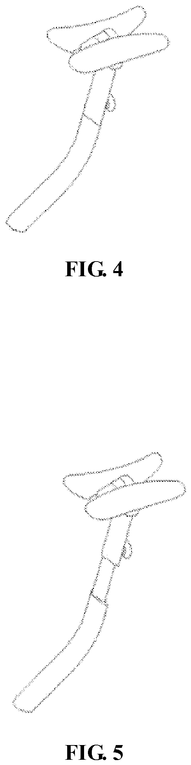

The control mechanism according to the embodiment may realize both leg-control operation and hand-control operation functions. When the control mechanism of the embodiment is used, the assembled control mechanism is mounted on a vehicle body 20 through a locking mechanism. For example, the control mechanism may be mounted on the vehicle body 20 through a locking nut or an engagement/clamping structure 21. During outdoor riding, when an operation with legs is required, the pull rod 4 can be moved to the lowermost position and the handle 5 is placed in a space formed by the leg-control pads 3, as shown in FIG. 4. When an operation with the handle 5 is required instead, the handle 5 may be pulled to pull the pull rod 4 out to a height suitable for holding or dragging, and the height of the rod body may also be adjusted at the same time to meet different height requirements. In addition, when different leg-control heights are required, the height of the rod body can be adjusted, and the upper rod body 9 can be slid to proper heights along the support rod 7, as shown in FIG. 5, so as to meet requirements of people with different heights.

FIG. 6 and FIG. 7 are schematic diagrams of a double-wheel dynamic balance vehicle mounted with a control mechanism of the embodiment. FIG. 6 is a schematic diagram when the height of the rod body and the length of the pull rod are both adjusted, and FIG. 7 is a schematic diagram when the height of the rod body and the length of the pull rod are not adjusted.

The above description shows and describes a plurality of preferred embodiments of the disclosure. However, as mentioned above, it should be understood that the disclosure is not limited to forms disclosed by the specification, should not be considered to exclude other embodiments, may be applied to various other combinations, modifications and environments and may be modified within the scope of the inventive concept of the specification through the above guidance or technologies or knowledge of related arts. All modifications and variations made by those skilled in the art without departing from the spirit and scope of the disclosure shall fall within the scope of protection of the appended claims of the disclosure.

## Claims

1. A control mechanism used for a dynamic balance vehicle, which is mounted on the dynamic balance vehicle comprising a vehicle body and a steering mechanism arranged on the vehicle body, the control mechanism comprising a rod body, a connecting seat, a leg-control pad, a pull rod and a handle,
wherein a sliding space for sliding of the pull rod is formed in the rod body; the sliding space has a first position and a second position; an upper end part of the rod body is connected with the connecting seat; a lower end part of the rod body is connected with the steering mechanism; and the rod body, when being rotated, drives the steering mechanism to rotate to control steering of the vehicle body;
an opening is formed in the connecting seat; the pull rod enters the sliding space through the opening; and the leg-control pad is connected to two sides of the connecting seat and drives the rod body to rotate; and
the pull rod retractably slides along the sliding space, and is limited in the sliding space, so as to slide between the first position and the second position; the handle is connected with the pull rod; a position of the handle is adjusted through the pull rod; and the handle drives the rod body to rotate.

2. The control mechanism according to claim 1, wherein the pull rod is limited in the sliding space through a positioning structure and a limiting structure, and the pull rod is prevented from moving away from or sinking into the sliding space through the positioning structure and the limiting structure.

3. The control mechanism according to claim 2, wherein the positioning structure comprises a limiting element arranged at one end of the pull rod in a sleeving manner and at least two positioning holes formed with an interval between the first position and the second position,
the limiting element comprises a limiting sleeve, a spring and a limiting bead; a recess is formed in the limiting sleeve; the spring is embedded in the recess; the limiting bead is placed on the spring; the limiting bead is engaged with the positioning hole at the first position when the pull rod is at the first position; and the limiting bead is engaged with the positioning hole at the second position when the pull rod is at the second position; and
the limiting mechanism comprises a groove formed in a length direction of the pull rod, a limiting hole formed in the sliding space and a limiting stud; the groove is provided with an upper limiting end and a lower limiting end; the limiting stud is engaged at the upper limiting end of the groove when the pull rod is at the first position; and the limiting stud is engaged at the lower limiting end of the groove when the pull rod is at the second position.

4. The control mechanism according to claim 1, wherein the rod body comprises an upper rod body and lower rod body which are separately arranged; and a height of the upper rod body relative to the lower rod body is adjustable,
the control mechanism further comprises a support rod, one end of which is nested and fixed in the lower rod body, and the other end is nested and slidably arranged in the upper rod body, wherein the upper rod body slides along the support rod to adjust the height, and is limited on the support rod.

5. The control mechanism according to claim 4, further comprising a pull rod support sleeve, wherein at least a part of the pull rod support sleeve is sleeved in the support rod; an upper end of the pull rod support sleeve is connected with the upper rod body; an interior of the pull rod support sleeve and an interior of the support rod together form the sliding space; and the pull rod is sleeved in the pull rod support sleeve to slide in the sliding space.

6. The control mechanism according to claim 5, wherein the upper end of the pull rod support sleeve is connected with the upper rod body through the limiting stud, and the upper rod body, when sliding along the support rod, drives the pull rod support sleeve to slide together.

7. The control mechanism according to claim 6, wherein a lower end of the pull rod is provided with a limiting sleeve in a sleeving manner; a recess is formed in the limiting sleeve; a spring is embedded in the recess; a limiting bead is placed on the spring; at least two positioning holes with an interval are formed in the pull rod support sleeve; the limiting bead is engaged with the positioning hole in the lowermost position of the pull rod support sleeve to limit the pull rod at the first position when the pull rod is at the first position; and the limiting bead is engaged with the positioning hole in the uppermost end of the pull rod support sleeve to limit the pull rod at the second position when the pull rod is at the second position, and
a groove with limiting ends is formed in the pull rod in the length direction; limiting holes are formed in the pull rod support sleeve and the upper rod body; the limiting stud is engaged at the upper limiting end of the groove through the limiting hole when the pull rod is at the first position; and the limiting stud is engaged at the lower limiting end of the groove through the limiting hole when the pull rod is at the second position.

8. The control mechanism according to claim 4, wherein a first limiting sleeve is arranged at an end, connected with the upper rod body, of the support rod in a sleeving manner; a second limiting sleeve is nested at a lower end of the upper rod body; and a lower end face of the first limiting sleeve is engaged with an upper end face of the second limiting sleeve to prevent the upper rod body from being separated from the support rod.

9. The control mechanism according to claim 4, wherein the upper rod body and the support rod are fixed relative to one another through a locking component; the upper rod body slides along the support rod to adjust the height when the locking component is in a loose state; and the upper rod body is fixed on the support rod when the locking component is in a locking state.

10. The control mechanism according to claim 9, wherein the locking component comprises a locking seat, a gasket arranged in the locking seat and a locking nut; a through hole for mounting the locking seat is provided in the upper rod body; and a mounting hole for mounting the locking nut is provided in the locking seat.
